# EUROPEAN PATENT APPLICATION

(11) **EP 3 725 748 A1**
(43) Date of publication of application: **21.10.2020**
(21) Application number: 20170241.2
(22) Date of filing: 17.04.2020
(51) Int. Cl.: C02F 9/00, C02F 1/00, C02F 1/28, C02F 1/42, C02F 11/00, C02F 11/12, C02F 11/122, C02F 11/123, C02F 11/127, C02F 103/00

(54) **METHOD AND APPARATUS TO DEPOLLUTE AND RECLAIM DOCKS, GULFS AND LAGOON ECOSYSTEMS**

(30) Priority: 19.04.2019 IT 201900006194
(71) Applicant: ITL Italconsult Costruzioni S.r.l., 74121 Taranto (IT)
(72) Inventor: Fasano, Vito, 74121 Taranto (IT)
(74) Representative: Petraz, Gilberto Luigi

(57) **Abstract**

Method to depollute and reclaim docks, gulfs and lagoon ecosystems, which comprises the steps of extracting and lifting non-Newtonian fluids, desanding, dehydrating the flow of contaminated material in order to obtain concentrated sludge and filtered fluid, chemical-physical purification of the filtered fluid obtained from the previous dehydration step, and the stabilization/solidification of the concentrated sludge and production of an inerted material (37).

## Description

### FIELD OF THE INVENTION

The present invention concerns a method and a corresponding apparatus to depollute and reclaim docks, gulfs and lagoon ecosystems (D.RE.DGE®), therefore, for example, it allows to depollute sea basins in which the seabeds, in particular shallow and limited seabeds, are affected by sediments polluted by heavy metals and organic compounds.

### BACKGROUND OF THE INVENTION

It is known that in marine environments such as docks, gulfs and lagoon ecosystems, it is possible to find environmental problems connected to the pollution of the seabed following the accumulation over time of substances extraneous to the marine cycle.

Such pollution can be traced back, for example, to continuous and/or episodic spillages as well as hydrogeological inflows to which the marine environment, present for example in a port basin, is subject in its capacity as a body of water that receives products resulting from the various anthropic activities that take place there.

Furthermore, the use of inappropriate technologies for dredging intended for the construction, expansion and/or ordinary maintenance of ports and connected infrastructures (piers, dry docks, etc.), as well as the ordinary and extraordinary maintenance of lagoons and corresponding mouths, could aggravate the state of pollution of the seabed.

It is also known that currently, as a result of this pollution, the marine habitats found in these gulfs, docks or lagoon ecosystems are often irreparably compromised and therefore difficult to reclaim from an environmental point of view.

To date, there is no method with connected equipment available that offers a systematic approach to the pollution problems as above. Substantially therefore, to date, no integrated systems are available, but above all systems that are effective as both the chemical-physical-mechanical characteristics of the sediments and the type and extent of contamination vary, which allow to reclaim the contaminated marine sediments and to consequently treat them, for the purpose of reusing them, thus avoiding having to dispose of them in landfills.

Known apparatuses and methods are described for example in documents KR-A-20110004520 and EP-A-0904858, but they are not very effective and do not satisfactorily solve the above problems.

There is therefore a need to perfect a method and a corresponding apparatus to depollute docks, gulfs and lagoon ecosystems that are able to guarantee a systematic and effective approach to the problem of pollution and reclamation of the seabed of marine environments such as docks, gulfs and lagoon ecosystems.

Therefore, one purpose of the present invention is to perfect a method to depollute docks, gulfs and lagoon ecosystems which is able to solve the environmental problem associated with the pollution of the seabed, in particular a limited seabed with limited draft, following the accumulation over time of substances extraneous to the marine cycle and attributable to continuous and/or episodic spillages as well as to the hydrogeological inflows to which the dock, the gulf or the lagoon ecosystem is subject in its capacity as the body of water that receives the products deriving from the various anthropic activities that take place there.

Another purpose of the present invention is to perfect a method to depollute and reclaim docks, gulfs and lagoon ecosystems by means of which it is possible to return habitats to a condition similar to that preceding the pollution.

Another purpose of the present invention is to provide an apparatus to depollute and reclaim docks, gulfs and lagoon ecosystems which can be effectively used for dredging and reclaiming the polluted sediments found on the seabed, in particular using equipment at least partly mobile on the body of water affected by the depollution operations.

Another purpose of the present invention is to provide a depollution apparatus for docks, gulfs and lagoon ecosystems by means of which, advantageously, in any of the operations carried out in the depollution process, risks of turbidity and secondary pollution are avoided, meaning the pollution of the column of water surrounding the extraction area, in particular thanks to the fact that the present apparatus avoids using rotary disintegration systems for extracting the sediments.

Another purpose of the present invention is to provide an apparatus to depollute docks, gulfs and lagoon ecosystems that is effective as both the chemical-physical-mechanical characteristics of the sediments and the type and extent of contamination vary.

The advantages of the invention are also attributable to the final destination of the sediments which, once stabilized and solidified by virtue of precise characteristics and subject to compliance with certain conditions, cease to be waste and can be reused for environmental restoration according to current legislation, avoiding landfilling.

The Applicant has devised, tested and embodied the present invention to overcome the shortcomings of the state of the art and to obtain these and other purposes and advantages.

### SUMMARY OF THE INVENTION

The present invention is set forth and characterized in the independent claims. The dependent claims describe other characteristics of the invention or variants to the main inventive idea.

In accordance with the above purposes, a method to depollute and reclaim docks, gulfs and lagoon ecosystems according to the invention comprises the following steps:
a) desanding, that is, a first granulometric separation performed by means of vibration screening of the aquatic sediments to be treated and deriving from an extraction step of non-Newtonian fluids from a seabed, and a subsequent separation with centrifugal action, by means of a hydrocyclone, so as to obtain a flow of relatively pure material which can be reclaimed directly, that is, without further treatments, and a flow of contaminated material, consisting in particular of silts and/or clays;
b) dehydration of the flow of contaminated material so as to obtain concentrated sludge and filtered fluid;
c) chemical-physical purification of the filtered fluid obtained from the previous dehydration step, by means of one or more of the following operations: reed valve sedimentation; sand filtration; filtration on activated carbons; ion exchange process;
d) stabilization/solidification of the concentrated sludge and production of an inerted material.

Advantageously, by means of the steps of desanding, dehydration, purification and inerting of the polluted sediments as above, suitably coordinated and timed, it is possible to provide an innovative and systematic approach to solve the problems of pollution in particular of limited seabeds, so as to intervene on the marine habitats to restore the conditions that existed prior to pollution.

Preferably, the dehydration is mechanical, carried out in particular by means of dynamic thickeners and filter presses or belt filter presses, so as to obtain concentrated sludge up to 65% dry.

The dehydration step can also be preceded by a dynamic thickening step, using mechanical devices, of the sediments collected and desanded.

According to another aspect of the invention, the chemical-physical purification step can take place by recirculating the filtered fluid on at least a reed valve chemical-physical purification unit combined with a sand filtration treatment and an absorption treatment on activated carbon and ion exchange resins. Thanks to this purification process, the present invention allows to pour all the water of the process, which represents about 50% by weight of the treated material, into the sea.

Furthermore, downstream of the inerting step using the inerting unit, the method can provide a storage step in one or more maturation and accumulation tanks, able to allow the stabilization and solidification of the treated material and intended to obtain suitable inert products suitable for reclamation, thus limiting their disposal in landfills.

The inerting line can comprise a hopper with an extractor belt with vanes; a conveyor belt for loading the mixer; a mixer/reactor; a vertical silo to store the reagents; a metering pump with servo control; a pump to meter the fluidifier, an electric compressor; an electrical control panel.

Another purpose of the invention is a depollution apparatus for docks, gulfs and lagoon ecosystems, comprising:
- at least an extraction device mounted on a vessel mobile along a body of water of a seabed to be depolluted, in which the extraction device is configured to collect polluted sediments from the seabed;
- a plant to treat the contaminated sediments provided with at least a unit to desand the sediments extracted by the extraction device, able to perform a first granulometric separation of the aquatic sediments to be treated, deriving from the extraction step, and a subsequent separation with centrifugal action so as to obtain a flow of relatively pure material and a flow of contaminated material, in particular silt and/or clay, at least a unit to dehydrate the sludge from which concentrated sludge and filtered fluid are obtained, at least a chemical-physical purification unit able to chemically and physically purify the filtered fluid obtained from the previous dehydration step and at least a unit to inert the concentrated sludge and to produce an inerted material.

Advantageously, by means of the present depollution apparatus, it is possible to proceed with a complete treatment of the polluted sediments, from dredging to inerting, in an effective and scarcely invasive way for the marine environment and such as to prevent, or limit to a minimum, any turbidity of the water following the operations performed, especially in the step of dredging the polluted sediments.

According to another aspect of the invention, the extraction device can comprise at least a pneumatic pump provided with at least a tank, in which the sediments extracted are conveyed by means of the action of at least a conveyor blade connected to the tank by at least a sediment collection pipe and able to move in a certain direction of translation by means of towing means.

Advantageously, moreover, the present depollution apparatus is configured to be installed both on land and on any vessel, pontoon or suchlike.

### DESCRIPTION OF THE DRAWINGS

These and other characteristics of the present invention will become apparent from the following description of some embodiments, given as a non-restrictive example with reference to the attached drawings wherein:
- fig. 1 is a plan view of an embodiment of the depollution apparatus according to the invention, in which part of the apparatus is installed on land and part is mobile on a body of water;
- fig. 2 is a flowchart which schematically shows the operations performed by a depollution apparatus for docks, gulfs and lagoon ecosystems according to the present invention;
- fig. 3 is a lateral view of a vessel equipped with an extraction device used in the present depollution apparatus and transported by a vessel;
- figs. 4a, 4b, 4c schematically show an operating sequence of the extraction device in fig. 3;
- fig. 5 is a front view of the extraction device in fig. 3;
- fig. 6 is a lateral view of a part of the extraction device in fig. 5.

To facilitate comprehension, the same reference numbers have been used, where possible, to identify identical common elements in the drawings. It is understood that elements and characteristics of one embodiment can conveniently be incorporated into other embodiments without further clarifications.

### DESCRIPTION OF EMBODIMENTS

We will now refer in detail to the various embodiments of the present invention, of which one or more examples are shown in the attached drawings. Each example is supplied by way of illustration of the invention and shall not be understood as a limitation thereof. For example, the characteristics shown or described insomuch as they are part of one embodiment can be adopted on, or in association with, other embodiments to produce another embodiment. It is understood that the present invention shall include all such modifications and variants.

Before describing these embodiments, we must also clarify that the present description is not limited in its application to details of the construction and disposition of the components as described in the following description using the attached drawings. The present description can provide other embodiments and can be obtained or executed in various other ways. We must also clarify that the phraseology and terminology used here is for the purposes of description only, and cannot be considered as limitative.

A method to depollute docks, gulfs and lagoon ecosystems according to the present invention comprises the following steps:
a) desanding, that is, a first granulometric separation of the aquatic sediments to be treated and obtained by a step of extracting non-Newtonian fluids from a seabed with consequent reduction in volumes, and a subsequent separation by centrifugal action, in particular by means of a hydrocyclone, in order to obtain a flow of relatively pure material which can be reclaimed directly, that is, without further treatments, and a flow of contaminated material, in particular silt or sludge;
b) dehydration of the flow of contaminated material in order to obtain concentrated sludge and filtered fluid; the dehydration can be in particular a mechanical dehydration, for example by means of dynamic thickeners and filter presses or belt filter presses, so as to obtain concentrated sludge up to 65% dry; the dehydration can also be preceded by a step of thickening the extracted and desanded sediments;
c) purification of the filtered fluid, in particular by means of chemical-physical treatments able to allow it to be discharged into the sea in compliance with current regulations, by means of one or more of the following operations: reed valve sedimentation; sand filtration; filtration on activated carbons; ion exchange process;
d) inerting of concentrated sludge, by means of suitable treatments and the production of inert products.

The method could also provide an inerting step by means of a combined inerting line and a storage step in one or more maturation and accumulation tanks 36, able to allow the stabilization and solidification of the treated material and intended to obtain inert products suitable for reclamation, thus limiting their disposal in landfills.

The inerting line can comprise in particular a hopper with an extractor belt including vanes; a conveyor belt for loading the mixer; a mixer/reactor; a vertical silo for storing reagents; a metering pump with servo control; a pump to meter the fluidifier; an electric compressor; an electrical control panel.

Furthermore, as we said, upstream of the desanding step, the present method could provide a step of extracting and lifting non-Newtonian fluids, that is, aquatic sediments from the seabed of a body of water to be depolluted.

The method can also provide a further step of reuse, or, if possible, the return of the inert products to the sea, after identifying the areas and functions most suitable for the purpose. The reuse step provides a prior insertion of the inerted material into solidification and storage tanks.

Before the various steps listed above and in particular before step a) (the extraction of the polluting sediments), it is possible to organize a preliminary step of characterizing the contamination status of the site to be depolluted, in order to categorize the specific problem of the site, or to categorize the specific type of pollution of that site in a wider ecological context.

The preliminary step of characterizing the site to be depolluted is able to adequately set the process parameters and on-site treatment of the materials. Afterwards, coring can be carried out in order to collect samples. A chemical and biological analysis is performed on the samples, to identify and trace the critical area to which the intervention can be limited.

The preliminary investigation step can follow two distinct lines, one relating to the state of benthic biocoenoses, the other concerning the type of pollutants and their concentration and spread.

A first operative line of the investigation step is therefore intended to establish the biocoenosis of the site, also to highlight the possible influence on its characteristics of pollutants of other nature and origin.

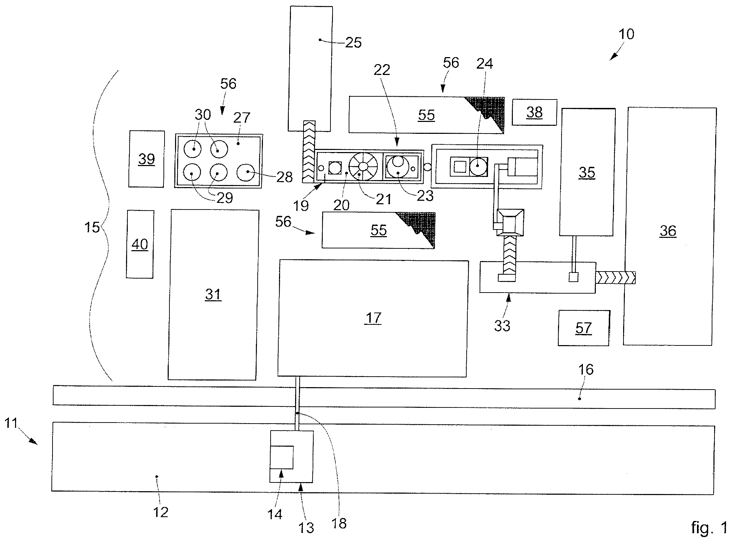

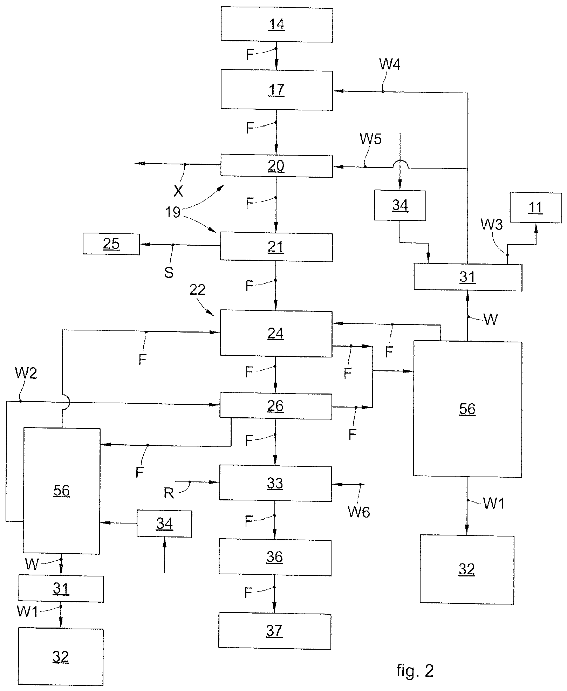

A second operative line of the investigation step is intended to establish the thickness of sediments in which the concentrations of pollutants are such as to require reclamation. Fig. 1 schematically shows a depollution apparatus 10 according to one embodiment of the invention, suitable to carry out a method as described above, while fig. 2 shows a block diagram which identifies the main operations and the main flows of material of the depollution apparatus 10.

The depollution apparatus 10 is located in proximity to a body of water 11 in which there is a seabed 12 to be depolluted.

The depollution apparatus 10 comprises at least a vessel 13 on which an extraction device 14 is positioned, in particular an extraction device 14 able to remove the polluted sediments from the seabed 12.

The depollution apparatus 10 comprises a treatment plant 15 for dredged sediments, which in the example of fig. 1 is positioned on a platform 16.

The treatment plant 15, suitably sized and possibly with a different layout, could also be disposed on a vessel of suitable sizes together with the extraction device 14, for example on a pontoon, a platform or suchlike, able to cross the body of water 11.

It is also possible to provide that some parts of the treatment plant 15 are disposed on a vessel and other parts are positioned on land.

In any case, at least the extraction device 14 is positioned on the vessel 13.

The treatment plant 15 comprises a tank 17 for storing and homogenizing the sediments extracted and coming from the extraction device, see the flow line F in fig. 2. The tank 17 can be connected to the extraction device 14 by means of at least a pipe 18, in particular a flexible pipe 18.

The treatment plant 15 comprises a desanding unit 19 able to desand the material received from the extraction device 14 or from the tank 17.

The desanding unit 19 is provided with a vibrating screen 20 for granulometric separation, in particular a flat, unidirectional vibrating screen 20 which removes coarse rubble (which is largely not soil), such as wood, metal, plastic, crushed stone etc. The vibrating screen 20 can be equipped with a grid provided with apertures having a gap equal to about 6 mm.

From the vibrating screen therefore, see also fig. 2, a first flow of sieved material intended for a hydrocyclone 21, and a second flow of waste, flow line X, will be generated. The waste has sizes greater than 6 mm and can be washed and transferred to a suitable storage tank.

Downstream of the vibrating screen 20, the desanding unit 19 comprises a hydrocyclone 21, in which the screened material is separated by centrifugal action into a silt fraction and sand. In the hydrocyclone 21, the separation of the sand from the silt fraction therefore takes place by transforming pressure energy into kinetic energy, therefore without any moving mechanical part.

Therefore, the flows exiting the hydrocyclone 21 comprise a flow of silt fraction, or sludge, for example with a size less than 50 microns, and a flow of sand that can be sent to a reclamation station 25, flow line S.

Downstream of the desanding unit 19 there is a dehydration unit 22, suitable to dehydrate the sludge coming from the desanding unit 19.

The dehydration unit 22 comprises a turbomixer 23 into which the sludge exiting the desanding treatment arrives and in which the addition of a polyelectrolyte takes place, in order to make the sludge suitable for the subsequent mechanical dehydration treatment.

It is possible to provide that the dehydration unit 22 is provided with a dynamic thickener 24, into which the fine materials with sizes for example less than 50 microns are sent. The dynamic thickener 24 can be a belt-type thickener.

In the dynamic thickener 24 the sludge is taken to optimum feed conditions toward at least a filter press or belt filter press 26.

From the belt filter press 26 and/or from the dynamic thickener 24, the filtered waters, see the flow lines F, are recirculated in a chemical-physical purification unit 56, comprising in particular a chemical-physical purification system 27, provided with a sand filtration device 28, ion exchange columns 29 and granular activated carbon columns 30 and operating in combination with reed valve devices 55.

The process water exiting from the chemical-physical purification unit 56 can be sent to a possible storage tank 31, flow line W, and then be discharged into the sea, while the sludge separated in this step is sent for purification, flow lines W1.

From the chemical-physical purification unit 56 a further flow can be provided at exit, to be sent again to the belt filter press 26 to wash the belts, see flow line W2.

Furthermore, downstream of the chemical-physical purification unit 56, a container 34 to supply replenishment water can be associated, which can also be used to replenish the storage tank 31. From the storage tank 31 it is possible to discharge the filtered fluid to the sea, flow line W3, in compliance with current regulations.

From the storage tank 31 it is also possible to provide that the water is sent at the beginning of the process, either to the tank 17 (also visible in fig. 1), flow line W4, or to the vibrating screen 20, flow line W5.

From the dehydration unit 22, concentrated sludge up to 65% of dry matter is obtained.

Downstream of the belt filter press 26 of the dehydration unit 22 an inerting unit 33 is provided, able to receive the sludge that has been suitably dehydrated.

The purpose of the inerting unit 33 is to physically and chemically modify the substances contained in the sludge.

The inerting unit 33 comprises an inerting reactor in which, in addition to the sludge coming from the dehydration unit 22, also QAS clays and reagents, flow line R, and water, flow line W6, are introduced.

The reagents can be contained in corresponding storage silos 35 and can comprise sodium silicate, Portland cement, calcium oxide.

From the inerting unit 33, therefore, the sludge is sent to one or more maturation and accumulation tanks 36, where the solidification process can take place.

Subsequently, possible reuse of the inerted material 37 will be assessed or, if possible, it can be returned to the sea, once areas and functions most suitable for the purpose have been identified.

The depollution apparatus 10 is also provided with an air treatment unit 38, associated in particular with the dehydration unit 22. In order to prevent the spread of unpleasant odors, it is provided to limit as much as possible the spread into the surrounding environment of the air that will come into contact with the material to be treated. The air treatment unit 38 can comprise, for example, scrubber abatement towers combined with a system provided with an activated carbon filter.

In the depollution apparatus 10 of fig. 1, an electric generator 39 and a compressor unit 40 are also shown.

In the depollution apparatus there will also be a tank 57 of fuel necessary for the functioning of the various drive and movement means of the treatment plant 15.

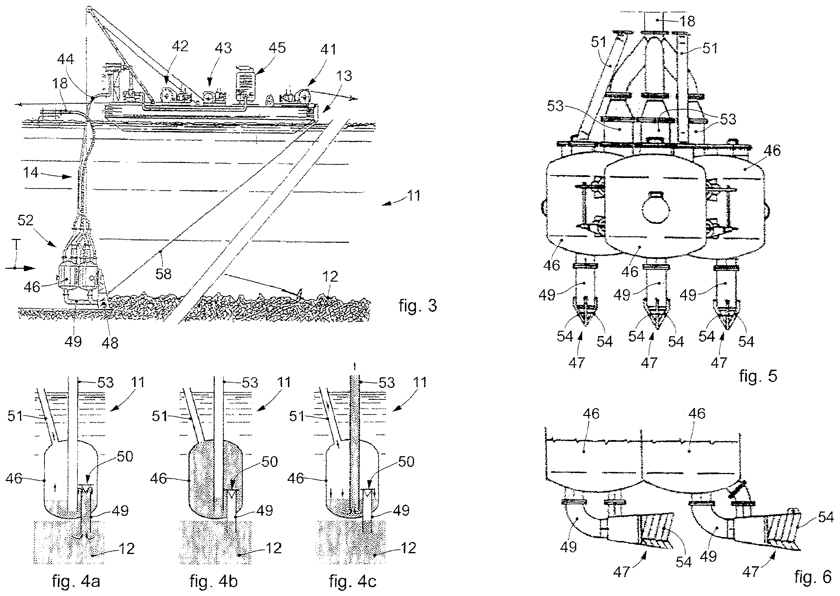

In one embodiment of the invention, the extraction of the sediments takes place by means of the extraction device 14 shown in figs. 3 to 6.

The extraction device 14 is associated with the vessel 13 and both are towed along the body of water 11 in one direction by a towing winch 41 and in the other direction by a return winch 42.

A lifting winch 43 is also installed on the vessel 13, associated with the extraction device 14 and able to lift or lower the extraction device 14 in the body of water 11.

The extraction device 14 is immersed in the body of water 11 in proximity to the seabed 12 and is associated with the pipe 18 to recover the polluted sediments collected and send them to the treatment plant 15.

A pipe 44 to supply compressed air is also connected to the extraction device 14; the compressed air can be supplied by an air compression unit 45 located on board the vessel 13.

The extraction device 14 comprises a pneumatic pump 52 provided with at least a tank 46, into which the extracted sediments are conveyed by the action of conveyor blades 47, which substantially dredge the seabed 12.

The conveyor blades 47 are formed by at least a pair of conveyor blades 54 disposed substantially in a V-shape, see fig. 5, able to suitably penetrate and slide easily on the seabed 12.

Preferably, a plurality of tanks 46 are used, for example three tanks 46, so as to guarantee continuous functioning of the extraction operations and a greater quantity of material extracted.

The conveyor blades 47 can be positioned between dredging elements 48 of the extraction device 14 to which towing cables 58 are connected.

The extraction device 14 is towed in a dredging direction T by the action of the towing winch 41 and therefore the dredged material, for example sludge, first penetrates inside the conveyor blades 47 by means of the mechanical thrust action and then inside the tanks 46 due to the effect of the external hydrostatic load, obtaining a concentration of solid in the mixture which normally exceeds 50% in volume.

Substantially, therefore, the extraction step of the sediments is carried out by means of a linear dredging, that is, a dredging performed according to the direction of translation T of the extraction device 14.

Preferably, the extraction device 14 is towed slowly, so as to allow the conveyor blades 47 of the extraction device 14 to perform their function of collecting sediment in the best possible way and also to avoid secondary pollution and turbidity in general. The towing speed in the dredging direction T can advantageously be about 1-2 meters per minute, so as to prevent phenomena of turbidity as above.

Each of the tanks 46 of the extraction device 14, see also the diagrams in fig. 4, comprises a pipe 49 to collect the sediments, connected to a corresponding conveyor blade 47 and in which an automatic return valve 50 is positioned.

Inside the tank 46 there is a pipe 53 to transfer the collected sediment toward the pipe 18, which will transfer it to the treatment plant 15. As can be seen, the pipe 53 has an extension such as to arrive near the bottom of the tank 46.

The tank 46 also comprises, on its upper part, another pipe 51 to extract and send air.

By using compressed air supplied by the air compression unit 45 located on board the vessel 13, the tanks 46, equipped with the non-return valves 50 with automatic drive, are emptied cyclically and filled by the difference in hydrostatic load, advantageously all without the use of any rotary disintegration system.

The work cycle of the extraction device 14 comprises a first step, see fig. 4a, of filling the tank 46 with the mud or sludge dredged, through the pipe 49, thanks to the counter-pressure due to the hydrostatic level, in the case of immersed dredging devices 14, as shown here by way of example, or due to gravity, in the case of fixed transport systems and thrust systems or boosters.

In the first step shown in fig. 4a, the non-return valve 50 opens automatically and allows the passage of sludge into the tank 46 and the simultaneous escape of air from the pipe 51.

When the tank 46 is full, see fig. 4b, the non-return valve 50 closes automatically, under its own weight and that of the liquid sludge collected in the tank 46.

At this point, see fig. 4c, compressed air is supplied through the pipe 51, which acts substantially as a plunger and the liquid sludge is forced to exit through the pipe 53.

As soon as the tank 46 is substantially emptied, the work cycle starts again as described starting from fig. 4a.

Advantageously, therefore, the extraction device 14 described is extremely simple, it works substantially by exploiting the translation of conveyor blades 47, therefore without the aid of rotary dredging systems, which would cause strong phenomena of turbidity, and it is suitable to be towed by a vessel 13, in particular a light vessel.

As mentioned previously, before proceeding to the step of extracting the sediments, therefore in particular the dredging step, a preliminary survey of sampling the polluted sediments is carried out, in order to delimit the areas at risk and for the subsequent determination of the thicknesses, whose thresholds of concentration of pollutants exceed the limit thresholds of the intervention. By using the extraction device 14, in addition to ensuring a considerable concentration of solid in the dredged mixture, a very low induced turbidity is also ensured and controlled dredging interventions are carried out, targeted and limited only to the modest quantity of polluted sediments.

Once this step of greater environmental risk is over, conventional high-power means can also be used, to allow the dredging of most of the remaining uncontaminated sludge.

The present method to depollute and reclaim docks, gulfs and lagoon ecosystems and the associated depollution apparatus, advantageously, therefore offer an innovative and systematic approach to solving pollution problems, in particular of limited seabeds, in order to restore conditions that existed prior to pollution.

It is clear that modifications and/or additions of steps and parts may be made to the method and apparatus to depollute and reclaim docks, gulfs and lagoon ecosystems as described heretofore, without departing from the field and scope of the present invention.

It is also clear that, although the present invention has been described with reference to some specific examples, a person of skill in the art shall certainly be able to achieve many other equivalent forms of method and apparatus to depollute and reclaim docks, gulfs and lagoon ecosystems, having the characteristics as set forth in the claims and hence all coming within the field of protection defined thereby.

In the following claims, the sole purpose of the references in brackets is to facilitate reading: they must not be considered as restrictive factors with regard to the field of protection claimed in the specific claims.

## Claims

1. Method to depollute and reclaim docks, gulfs and lagoon ecosystems, **characterized in that** it comprises the following steps:
a) desanding, that is, a first granulometric separation performed by means of vibration screening of the aquatic sediments to be treated and deriving from an extraction step of non-Newtonian fluids from a seabed (12), and a subsequent separation with centrifugal action, by means of a hydrocyclone (21), so as to obtain a flow of relatively pure material which can be reclaimed directly, that is without further treatments, and a flow of contaminated material, in particular silts and/or clays;
b) dehydration of the flow of contaminated material so as to obtain concentrated sludge and filtered fluid;
c) chemical-physical purification of the filtered fluid obtained from the previous dehydration step, by means of one or more of the following operations: reed valve sedimentation; sand filtration; filtration on activated carbons; ion exchange process;
d) stabilization/solidification of the concentrated sludge and production of an inerted material (37).

2. Method as in claim 1, **characterized in that** said dehydration is of the mechanical type, in particular by means of dynamic thickeners and filter presses or belt filter presses (26), so as to obtain concentrated sludge up to 65% dry.

3. Method as in claim 1, **characterized in that** said dehydration step is preceded by a dynamic thickening step of the sediments collected and desanded, using mechanical apparatuses.

4. Method as in claim 1, **characterized in that** said chemical-physical purification step is performed by recirculating the filtered fluid on at least a chemical-physical purification unit (56) with reed valves, combined with a sand filtration treatment and with an absorption treatment on activated carbon and ionexchange resins.

5. Method as in claim 1, **characterized in that** it comprises a stabilization/inerting step comprising an inerting line or unit and a storage step in one or more maturation and accumulation tanks (36), able to allow the stabilization and solidification of the treated material and in turn obtain inert products suitable for reclamation, limiting their disposal in landfills.

6. Apparatus to depollute and reclaim docks, gulfs and lagoon ecosystems, **characterized in that** it comprises:
- at least an extraction device (14) associated with a vessel (13) mobile along a body of water (11) of a seabed (12) to be depolluted, said extraction device (14) being configured to collect polluted sediments from said seabed (12);
- a plant (15) to treat the contaminated sediments provided with at least a unit (19) to desand the sediments extracted by said extraction device (14), able to perform a first granulometric separation of the aquatic sediments to be treated and obtained from the extraction step with consequent reduction in volumes, and a subsequent separation with centrifugal action so as to obtain a flow of relatively pure material and a flow of contaminated material, in particular silts and/or clays, at least a unit (22) to dehydrate the sludge from which concentrated sludge and filtered fluid are obtained, at least a chemical-physical purification unit (56) able to chemically and physically purify the filtered fluid obtained from the previous dehydration step and at least a unit (33) to stabilize/solidify the concentrated sludge and to produce a reclaimable inerted product (37).

7. Depollution apparatus as in claim 6, **characterized in that** said extraction device (14) comprises at least a pneumatic pump (52) provided with at least a tank (46), in which the extracted sediments are conveyed by the action of at least a conveyor blade (47) connected to said tank (46) by means of at least a pipe (49) to collect the sediments and able to move in a given direction of translation (T) by means of towing means (41).

8. Depollution apparatus as in claim 6, **characterized in that** it is configured to be installed on land and/or on board vessels.
